# EUROPÄISCHE PATENTSCHRIFT

(11) **EP 0 406 472 B1**
(45) Veröffentlichungstag und Bekanntmachung des Hinweises auf die Patenterteilung: **21.09.1994**
(21) Anmeldenummer: 89112498.4
(22) Anmeldetag: 07.07.1989
(51) Int. Cl.: G05B 19/18

(54) **Verfahren zum Bestimmen einer Werkstückkontur**
Process for determining the contour of a work piece
Procédé pour déterminer le contour d'une pièce usinée

(43) Veröffentlichungstag der Anmeldung: 09.01.1991
(73) Patentinhaber: SIEMENS AKTIENGESELLSCHAFT, 80333 München (DE)
(72) Erfinder: Hoschka, Jürgen, D-7065 Winterbach (DE)

(56) Entgegenhaltungen:
- EP-A- 0 015 045
- DE-A- 3 234 241
- US-A- 3 963 364

## Beschreibung

Die Erfindung bezieht sich auf ein Verfahren zum Bestimmen der Ist-Kreisparameter einer mit ihren Soll-Kreisparametern vorgegebenen Werkstückkontur mit Hilfe eines bidirektional schaltenden Meßtasters, dessen Bewegung von einer numerisch gesteuerten Maschine, insbesondere einer Werkzeugmaschine, gesteuert wird und dessen Kalibrierung durch bidirektionales Anfahren an die Kontur erfolgt.

Bei der Bearbeitung von Werkstücken in numerisch gesteuerten Maschinen erweist es sich häufig als erforderlich, vorhandene Bohrungen oder auch andere kreisförmige Konturen zu vermessen, bevor weitere Verarbeitungsschritte ausgeführt werden können. Bei einem üblichen Verfahren der eingangs genannten Art wird dabei mit einem kalibrierten Meßtaster jeweils eine achsparallele Vierpunktmessung vorgenommen. Das bedeutet, daß der Meßtaster zunächst in die zu vermessende Bohrung hineingefahren wird, dann bidirektional in X-Richtung jeweils bis zum Anschlag an die Bohrungskontur geführt wird und dann dieser Vorgang in Y-Richtung wiederholt wird. Durch die vier Orte des Anschlags ergeben sich damit demzufolge vier Punkte der kreisförmigen Kontur, aus denen die Ist-Kreisparameter ermittelt werden können. Bei diesem Verfahren muß der Meßtaster allerdings unbedingt allseitig kalibriert sein, weil ein Berühren der Kontur mit dem Meßtaster unter den verschiedensten Winkeln erfolgen kann. Diese Kalibrierung des Meßtasters erfordert einen nicht unerheblichen Zeitaufwand.

Ein Verfahren der eingangs genannten Art ist aus der DE-A1-32 34 241 bekannt. Der dabei verwendete Meßtaster erfordert eine um den gesamten Umfang sich erstreckende Kalibrierung. Damit ist er zwar universell verwendbar, jedoch ist diese Art der Kalibrierung relativ zeitaufwendig.

Aufgabe der Erfindung ist es, ein Verfahren der eingangs genannten Art so auszubilden, das mit relativ einfachen Meßtastern und ohne großen Kalibrierungsaufwand die Ist-Kreisparameter von kreisförmigen Werkstückkonturen erfaßt werden können.

Gemäß der Erfindung wird diese Aufgabe dadurch gelöst, daß die Kalibrierung nur für eine Kontaktierrichtung durchgeführt wird dadurch, daß der Meßtaster von einem Ausgangsort an einen Meßpunkt der Kontur gefahren wird, zum Ausgangsort zurückgefahren wird, um 180° gedreht wird, noch einmal an den Meßpunkt gefahren wird und zurück zum Ausgangsort gefahren wird, daß der Meßtaster mit einer Schwenkbewegung nacheinander auf mindestens drei zur durch die Soll-Kreisparameter gegebene Kontur definiert beabstandete Ausgangsorte verfahren wird, die sich in vorgegebenen Zentriwinkeln zur Kontur befinden, daß der Meßtaster von den weiteren Ausgangsorten nur jeweils einmal gegen die Kontur gefahren wird, daß die Referenzorte an denen dabei ein Schalten des Meßtasters erfolgt, registriert werden und daß in der Steuerung anhand der Referenzorte die Ist-Kreisparameter errechnet werden.

Während beim Stand der Technik der Meßtaster stets rundherum kalibriert werden muß, ist bei der vorliegenden Erfindung also nur ein einmaliges, allein in einer Richtung notwendiges Kalibrieren erforderlich und nachdem eine solche Kalibrierung erfolgt ist, wird der Meßtaster entlang der zu erwartenden Kreiskontur geschwenkt. Sofern Soll- und Ist-Kontur eines Werkstückes nicht allzuweit aufeinander liegen, ist damit eine ausreichend genaue Ist-Parameterbestimmung möglich.

Die jeweilige Kontur kann dabei unter Zugrundelegung beliebiger Zentriwinkel vermessen werden, wodurch auch Bohrungssegmente oder Wellensegmente leicht vermessen werden können, deren jeweiliger Mittelpunkt auch außerhalb des Maschinenverfahrbereiches liegen kann. urch die Vorgabe der Zentriwinkel, an denen die jeweiligen Messungen vorzunehmen sind, kann auch sichergestellt werden, daß die Messung nicht in nutförmige Ausnehmungen einer Kreiskontur fallen oder gerade dort liegen, wo mit Werkstoffspänen zu rechnen ist. Prinzipiell reichen drei Meßpunkte zur Bestimmung der Kreisparameter, jedoch ergibt die Verwendung von vier Meßpunkten eine vergrößerte Meßgenauigkeit.

Eine erste Ausbildung der Erfindung ist dadurch gekennzeichnet, daß als Meßpunkt einer der Referenzorte vorgesehen ist. Dadurch wird der resultierende Meßzyklus möglichst kurz gehalten.

Dadurch, daß dann, wenn innerhalb eines definierten Abstandes kein Schalten des Meßtasters ausgelöst wird, ein Fehlersignal erfolgt, wird sichergestellt, daß dann, wenn unvorhergesehene Lageabweichungen auftreten, der Bediener über diesen Zustand unverzüglich informiert wird.

Ein Ausführungsbeispiel der Erfindung ist in der Zeichnung dargestellt und wird im folgenden näher erläutert. Dabei zeigen:
- FIG 1: ein Schaubild zum Verfahrweg eines Meßtasters und
- FIG 2: eine Aufstellung der dem Verfahrweg zugrundeliegenden Verfahrensschritte.

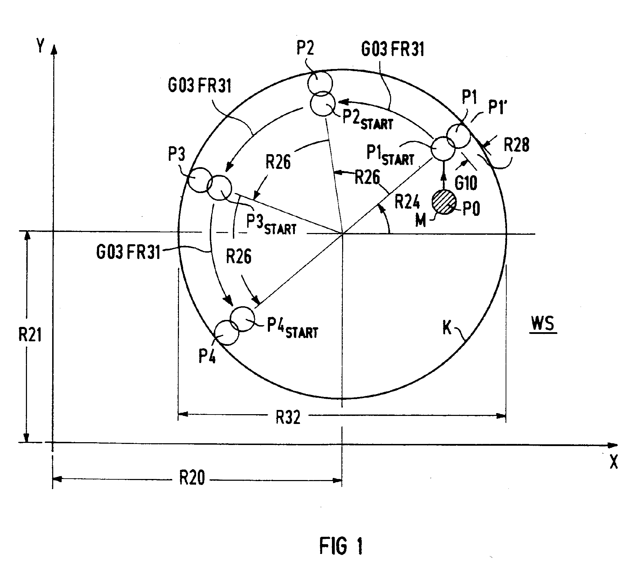

In der Darstellung gemäß FIG 1 ist ein Meßtaster M einer der Übersichtlichkeit halber nicht dargestellten Werkzeugmaschine schraffiert angedeutet. Der Meßtaster M soll dabei die Innenkontur (Kontur K) eines Werkstückes WS, das der Übersichtlichkeit halber nicht in allen Einzelheiten gezeigt ist, abtasten, um die tatsächliche Lage der kreisförmigen Kontur K gegenüber einer Sollage festzustellen. Die Sollage der kreisförmigen Kontur K sei in einem karthesischem Koordinatensystem durch Definition des zugehörigen Kreismittelpunktes mit Hilfe von Parametern R20 für den X-Wert und R21 für den Y-Wert sowie einem Parameter R32 für den Durchmesser definiert. Die maximal zu erwartende Lageabweichung der Kontur K gegenüber den Sollwerten sei dabei kleiner als ein Abstand, der durch einen Parameter R28 definiert wird.

Zum Ausmessen der Kontur K wird ausgehend von einer Position P0 des Meßtasters M, bei der dieser in die Kontur K eingeführt wird, der Meßtaster M zunächst in eine Position P1_{START} gebracht, die als ein erster Ausgangspunkt anzusehen ist. Das Meßverfahren erfolgt dabei so, daß der Ausgangsort (Position P1_{START}), auf einem im Startwinkel R24 angeordneten Strahl durch den Soll-Mittelpunkt der Kontur K liegt und gleichzeitig der Abstand R28 von der Sollage der Kontur K eingehalten wird. Im übrigen wird der Meßtaster M dabei auch um den Startwinkel R24 um seine Mittelachse gedreht, damit seine Schaltflanke zur Kontur K ausgerichtet ist. In einem nächsten Schritt wird der Meßtaster M mit einer vorgegebenen Geschwindigkeit radial gegen die Kontur K verfahren, bis ein Schaltvorgang des Meßtasters M ausgelöst wird. Dies möge an einer Position P1 geschehen.

Sofern die tatsächliche Kontur K von der zu erwartenden Kontur weiter beabstandet ist, als daß während eines durch den Parameter R28 gegebenen Weges ein Anschlag des Meßtasters M erfolgt, kann unverzüglich von der Steuerung ein Fehlersignal ausgegeben werden.

Der Ort des Anschlags wird dann mit seinen Koordinatenwerten in der Steuerung registriert und der Meßtaster M wird auf den Ort P1_{START} zurückgefahren. Nun wird der bidirektional schaltende Meßtaster M am Ort P1_{START} um 180° um seine Achse gedreht, so daß die zweite Schaltstellung des Meßtasters M wirksam wird, wenn im folgenden der Meßtaster M mit 180° Umschlag wiederum radial gegen die Kontur K verfahren wird. Der Ort des zweiten Anschlages kann dann als Position P1′ mit den zugehörigen Koordinatenwerten registriert werden. Anhand einer eventuell vorliegenden Differenz zwischen den Positionen P1 und P1′ erfolgt die Kalibrierung des Meßtasters M. Damit ist aber nunmehr auch ein erster Ort auf der Kontur K vermessen worden.

Ausgehend von der Position P1_{START} erfolgt nun mit einer Geschwindigkeit FR31 eine Zirkularbewegung (GO3) um einen Drehwinkel R26. Diese Bewegung bringt den Meßtaster M in eine Position P2_{START}, aus der wiederum ein radiales Bewegen des Meßtasters M gegen die Kontur K erfolgt. Damit ergeben sich die Koordinatenwerte einer Position P2 als zweitem Konturort. In entsprechender Weise werden für Positionen P3 und P4 deren Koordinaten aufgenommen, indem von Ausgangsorten P3_{START} und P4_{START} der Meßtaster M gegen die Kontur K verfahren wird. Durch die dann insgesamt vier Meßpunkte der kreisförmigen Kontur K können deren tatsächliche Mittelpunkts- und Durchmesserwerte errechnet werden und diese lassen sich dann für die weitere Bearbeitung des Werkstückes WS berücksichtigen.

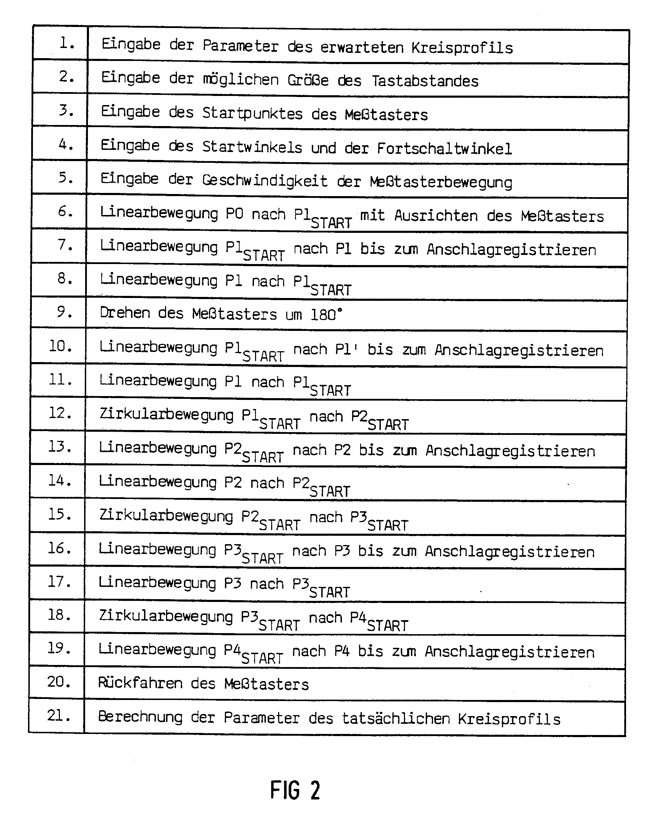

In der Darstellung gemäß FIG 2 ist in Form einer Tabelle die Abfolge der im Zusammenhang mit FIG 1 geschilderten Verfahrensschritte nochmals zusammengefaßt aufgeführt.

In einem Schritt 1 werden die Parameter des erwarteten Kreisprofils eingegeben, d.h. dabei werden die Parameter R21, R20 und R32 vorgegeben. In einem Schritt 2 wird der mögliche Tastabstand vorgegeben, der durch den Parameter R28 gegeben ist.

Der Startpunkt des Meßtasters M kann in einem Verfahrensschritt 3 durch Eingabe der Parameter für die Position P0 vorgegeben werden. Der Verfahrensschritt 4 beinhaltet die Eingabe des Startwinkels, der durch den Parameter R24 vorgegeben ist und des Fortschaltwinkels, der durch den Parameter R26 angegeben ist. Im Ausführungsbeispiel sind dabei alle Fortschaltwinkel mit dem gleichen Parametern R26 behaftet. Prinzipiell wäre es jedoch auch möglich, unterschiedlich große Fortschaltwinkel vorzusehen.

Selbstverständlich ist auch die Geschwindigkeit der Meßtasterbewegung vorzugeben, was in einem Verfahrensschritt 5 erfolgen kann. Das Bewegen des Meßtasters M von der Position P0 in die Position P1_{START} mit gleichzeitigem Ausrichten des Meßtasters M wird im Verfahrensschritt 6 bewerkstelligt. Die Linearbewegung von der Position P1_{START} nach der Position P1, d.h. dem Ort des Anschlags, erfolgt im Verfahrensschritt 7; daraufhin wird im Verfahrensschritt 8 ein Rückzug auf die Position P1_{START} vorgenommen. Um den Meßtaster M zu kalibrieren, erfolgt in einem Verfahrensschritt 9 ein Drehen des Meßtasters um 180°, woraufhin in einem Verfahrensschritt 10 mittels einer Linearbewegung der Meßtaster M wieder von der Position P1_{START} zum Ort des zweiten Anschlags P1′ erfolgt. Daraufhin wird der Meßtaster M wieder von P1′ nach P1_{START} zurückgezogen, was im Verfahrensschritt 11 geschieht.

Nachdem nunmehr ein erster Ort der tatsächlichen Kontur K des Werkstückes WS bestimmt ist und dazu eine Kalibrierung des Meßtasters M vorgenommen worden ist, erfolgt eine Zirkularbewegung um den Fortschaltwinkel R26 von P1_{START} nach P2_{START}. Von diesem Verfahrensschritt 12 erfolgt der Verfahrensschritt 13 mit dem Anschlagregistrieren an der Position P2 und daraufhin im Verfahrensschritt 14 der Rückzug auf P2_{START}. Die Verfahrensschritte 14 bis 20 beinhalten für die Positionen P3 und P4 die gleichen Vorgänge wie eben für die Position P2 geschildert. In einem Verfahrensschritt 20 kann dann der Meßtaster M zurückgefahren werden und im Verfahrensschritt 21 erfolgt die Berechnung der Parameter des tatsächlichen Kreisprofils.

Das Ausführungsbeispiel zeigt das Abtasten einer kreisförmigen Kontur in einer Ebene. Selbstverständlich wäre es auch möglich, die der Erfindung zugrundeliegende Idee auf kugelförmige, räumliche Konturen zu übertragen. Der Begriff des Abtastens ist dabei so zu sehen, daß sowohl berührende als auch berührungslose Meßtaster verwendet werden können, wobei die letztgenannten beispielsweise nach optischen oder beliebigen anderen physikalischen Prinzipien arbeiten können.

## Patentansprüche

1. Verfahren zum Bestimmen der Ist-Kreisparameter einer mit ihrer Soll-Kreisparametern vorgegebenen Werkstückkontur mit Hilfe eines bidirektional schaltenden Meßtasters, dessen Bewegung von einer numerisch gesteuerten Maschine, insbesondere einer Werkzeugmaschine, gesteuert wird und dessen Kalibrierung durch bidirektionales Anfahren an die Kontur erfolgt, **dadurch gekennzeichnet,** daß die Kalibrierung nur für eine Kontaktierrichtung durchgeführt wird dadurch, daß der Meßtaster von einem Ausgangsort (P1_{START}) an einen Meßpunkt (P1) der Kontur gefahren wird, zum Ausgangsort (P1_{START}) zurückgefahren wird, um 180° gedreht wird, noch einmal an den Meßpunkt (P1′) gefahren wird und zurück zum Ausgangsort (P1_{START}) gefahren wird, daß der Meßtaster (M) mit einer Schwenkbewegung nacheinander auf mindestens drei zur durch die Soll-Kreisparameter (R20,R21,R32) gegebene Kontur definiert beabstandete Ausgangsorte (P1_{START} bis P4_{START}) verfahren wird, die sich in vorgegebenen Zentriwinkeln (R24,R26) zur Kontur befinden, daß der Meßtaster (M) von den weiteren Ausgangsorten (P1_{START} bis P4_{START}) nur jeweils einmal gegen die Kontur gefahren wird, daß die Referenzorte (P1,P1′, P2 bis P4) an denen dabei ein Schalten des Meßtasters (M) erfolgt, registriert werden und daß in der Steuerung anhand der Referenzorte (P1 bis P4) die Ist-Kreisparameter errechnet werden.

2. Verfahren nach Anspruch 1, **dadurch gekennzeichnet,** daß als Meßpunkt (P1,P1′) einer der Referenzorte (P1 bis P4) vorgesehen ist.

3. Verfahren nach Anspruch 1 oder 2, **dadurch gekennzeichnet,** daß dann, wenn innerhalb eines definierten Abstandes (R28) kein Schalten des Meßtasters (M) ausgelöst wird, ein Fehlersignal erfolgt.

## Claims

1. Method for determining the actual circle parameters of a work piece contour, which is preset with its target circle parameters, with the aid of a bidirectionally switching measuring tracer, the movement of which is controlled by a numerically controlled machine, in particular a machine tool, and the calibration of which is effected by bidirectional approach to the contour, characterised in that the calibration is only carried out for one contacting direction in that the measuring tracer is moved from a starting place (P1_{START}) to a measuring point (P1) of the contour, is moved back to the starting place (P1_{START}), is turned by 180°, is moved once again to the measuring point (P1′) and is moved back to the starting place (P1_{START}), in that the measuring tracer (M) is conveyed with a swinging movement successively to at least three starting places (P1_{START} to P4_{START}) which are spaced apart in a defined manner relative to the contour given by the target circle parameters (R20,R21,R32) and which are located at preset central angles (R24,R26) relative to the contour, in that the measuring tracer (M) is moved from the further starting places (P1_{START} to P4_{START}) only once in each case towards the contour, in that the reference places (P1, P1′, P2 to P4), at which a switch of the measuring tracer (M) occurs, are recorded and in that the actual circle parameters are calculated in the control with the aid of the reference places (P1 to P4).

2. Method according to claim 1, characterised in that one of the reference places (P1 to P4) is provided as a measuring point (P1,P1′).

3. Method according to claim 1 or 2, characterised in that when no switch of the measuring tracer (M) is triggered within a defined interspace (R28), an error signal occurs.

## Revendications

1. Procédé pour déterminer le paramètre de cercle réel d'un contour d'une pièce à usiner, dont les paramètres de cercle de consigne sont donnés à l'avance, à l'aide d'un palpeur de mesure à commutation bidirectionnelle, dont le déplacement est commandé par une machine à commande numérique, notamment une machine-outil, et dont l'étalonnage s'effectue au moyen d'une approche bidirectionnelle du contour, caractérisé en ce qu'il consiste à n'effectuer l'étalonnage que pour une direction de contact, à approcher le palpeur de mesure d'un point de mesure (P1) du contour à partir d'un emplacement de départ (P1_{START}), à le ramener à l'emplacement de départ (P_{START}), à le faire tourner de 180°, à le rapprocher encore une fois du point de mesure (P1′) et à le ramener à l'emplacement de départ (P1_{START}), à amener le palpeur de mesure (M) successivement au moyen d'un mouvement de basculement en au moins trois emplacements de départ (P1_{START} à P4_{START}) qui sont à une distance définie par rapport au contour donné par les paramètres de cercle de consigne (R20, R21, R32) et qui sont à des angles au centre (R24, R26) donnés à l'avance par rapport au contour, à approcher que le palpeur de mesure (M) seulement une fois du contour à partir des autres emplacements de départ (P1_{START} à P4_{START}), à enregistrer les emplacements de référence (P1, P1′, P2 à P4), où s'effectue une commutation du palpeur de mesure (M), et à calculer les paramètres de cercle réels dans l'unité de commande au moyen des emplacements de référence (P1 à P4).

2. Procédé suivant la revendication 1, caractérisé en ce qu'il consiste à prévoir l'un des emplacements de référence (P1 à P4) comme point de mesure (P1, P1′).

3. Procédé suivant la revendication 1 ou 2, caractérisé en ce qu'il consiste à produire un signal d'erreur si aucune commutation du palpeur de mesure (M) n'est déclenchée sur une distance (R28) définie.
